# EUROPEAN PATENT APPLICATION

(11) **EP 4 329 166 A1**
(43) Date of publication of application: **28.02.2024**
(21) Application number: 22192487.1
(22) Date of filing: 26.08.2022
(51) Int. Cl.: H02K 11/33, H02K 5/20, H02K 9/19

(54) **ARRANGEMENT, COMPRISING AN ELECTRIC MOTOR AND AN INVERTER AND METHOD FOR ASSEMBLING THE ARRANGEMENT**

(71) Applicant: Valeo eAutomotive Germany GmbH, 91056 Erlangen (DE)
(72) Inventor: Fürstenhöfer, Christian, 91056 C/o VEA, Erlangen (DE); Eichner, Markus, 91056 C/o VEA, Erlangen (DE); Pfeiffer, Kay, 91056 C/o VEA, Erlangen (DE); Kourgialis, Alexandros, 91056 C/o VEA, Erlangen (DE); Huebner, Maximilian, 91056 C/o VEA, Erlangen (DE)
(74) Representative: Valeo Powertrain Systems

(57) **Abstract**

Arrangement (1), comprising an electric motor (3) and an inverter (2), wherein the electric motor (3) is received in a motor housing (4) and the inverter (2) is received in an inverter housing (5), wherein the inverter housing (5) closes an opening of the motor housing (4). Further, a corresponding method for assembling an arrangement (1), comprising an electric motor (3) and an inverter (2), is proposed.

## Description

The invention relates to an arrangement, comprising an electric motor and an inverter.

Electric machines are increasingly being used in electrically powered vehicles and hybrid vehicles, predominantly as an electric motor for driving a wheel or an axle of a vehicle.

Such an electric motor is usually mechanically coupled to a gearbox for speed adjustment. In addition, the electric motor is usually electrically coupled with an inverter which generates an alternating voltage for operating the electric motor from a direct voltage supplied by a battery.

Conventionally, the inverter is often integrated in a motor housing, which may also comprise a gearbox. It is also common to integrate the inverter in a cooling circuit of the electric motor. However, such a structure has the drawback that during production a separate testing of the inverter or the electric motor is not possible or at least more difficult. As inverters are usually produced on a separate production line, there is a need for a possibility to test the inverter separately.

Accordingly, the invention is based on the problem to provide an arrangement, comprising an electric motor and an inverter, which allows to test the inverter separately.

This problem is solved by an arrangement with the features of claim 1.

According to the invention, the electric motor is received in a motor housing and the inverter is received in an inverter housing, wherein the inverter housing closes an opening of the motor housing.

The invention is based on the idea that an inverter, after it has been manufactured and installed in an inverter housing, can be tested separately from an electric motor. This advantage simplifies testing inverters which come from a production line. In case any repair or amendment is necessary, this can be easily effected, as the inverter is not yet connected to an electric motor.

Another advantage is that the inverter housing closes and opening of the motor housing, so that a separate cover for this opening is not necessary.

Preferably, the inverter of the inventive arrangement comprises a cooling circuit having a cooling channel with an inlet and an outlet, whereby the cooling circuit is formed separately from a cooling circuit of the electric motor. As the inverter comprises a separate cooling circuit it can be tested separately from the electric motor, which has its own cooling circuit. As the inventive arrangement comprises a first cooling circuit for the inverter and a second cooling circuit for the electric motor both cooling circuits can be optimized for the respective tasks and with regard to boundary conditions. For example, the cooling fluid in the cooling circuit of the inverter can have a different temperature compared to the cooling fluid in the cooling circuit of the electric motor.

In the inventive arrangement it is preferred that the inverter comprises a DC-link capacitor, power electronics and a printed circuit board. With these components the inverter can be pre-assembled and tested and subsequently connected with the electric motor.

According to the invention it is particularly preferred that the printed circuit board is located at a side of the inverter facing the motor. This arrangement is space-saving and reduces the outer dimensions of the inverter housing.

Preferably, the inverter is a pre-assembled component, which is attached to the motor housing. accordingly, the inverter with its housing and its internal components is a compact module, which is pre-fabricated and tested and subsequently mounted in a motor housing.

The invention is further related to a method for assembling an arrangement comprising an electric motor and an inverter. The inventive method comprises the following steps: placing an electric motor in a motor housing; pre-assembling an inverter with an inverter housing; and arranging the preassembled inverter in an opening of the motor housing, thereby closing the opening.

The invention is explained by means of a preferred example with reference to the drawings. The drawings are schematic representations and show:
- Fig. 1: a perspective view of an inventive arrangement;
- Fig. 2: a side view of the arrangement of Fig. 1; and
- Fig. 3: a sectional view of the arrangement of Fig. 1.

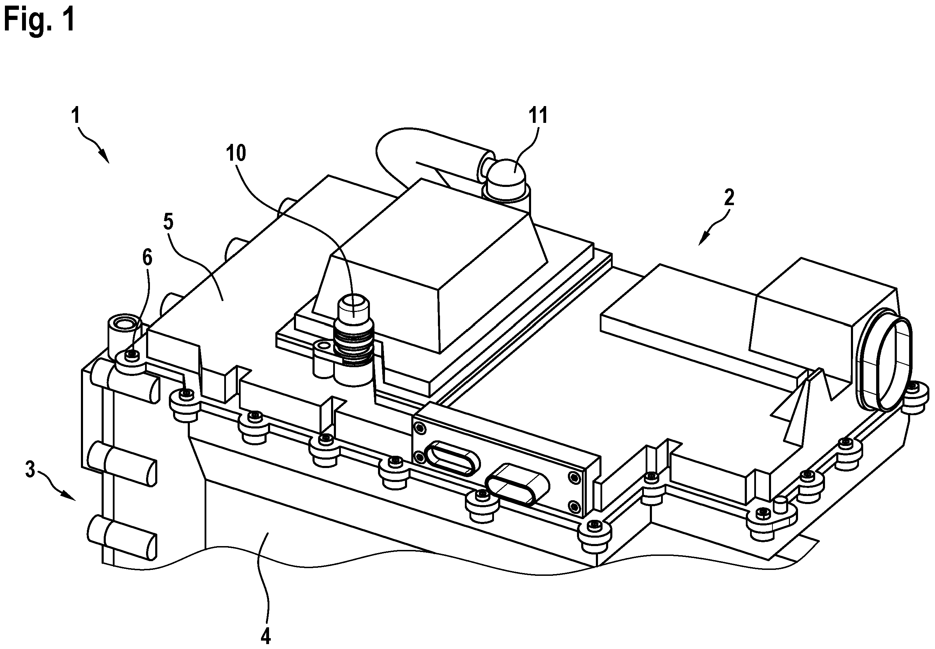

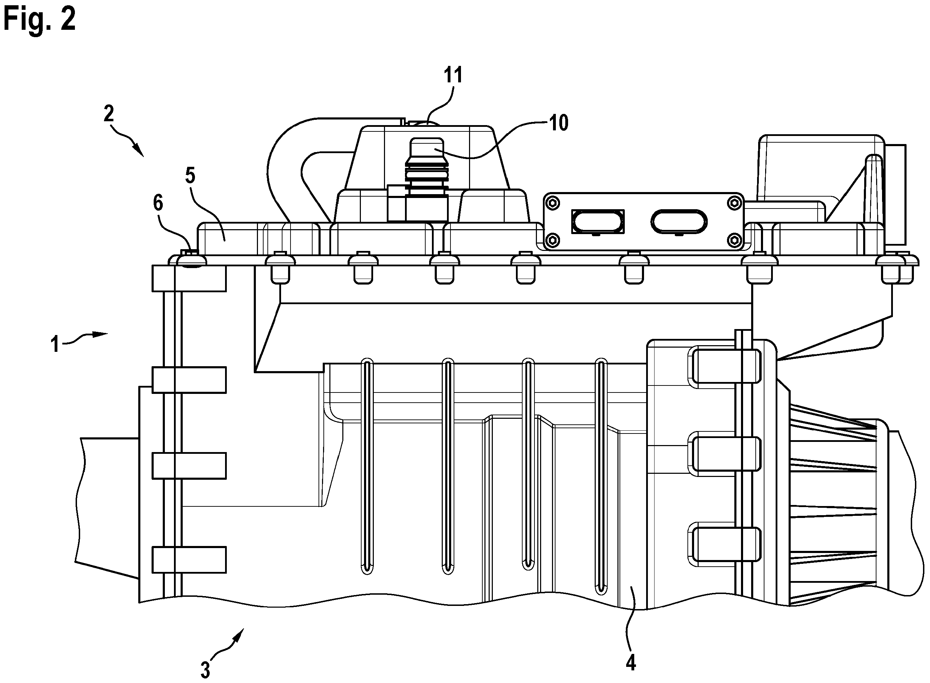

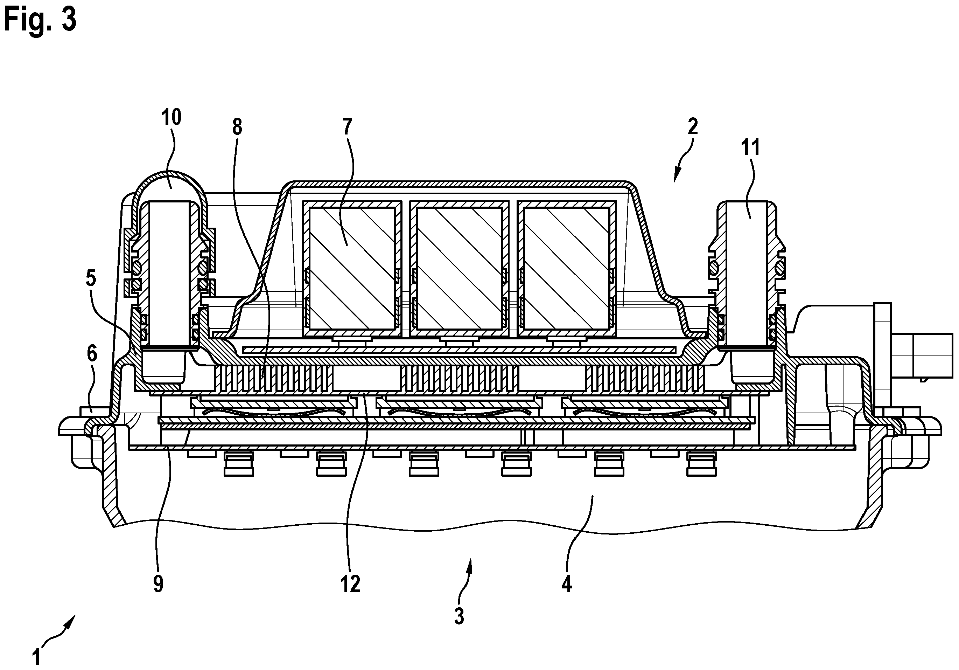

Fig. 1 is a perspective view of the upper part of an inventive arrangement 1 comprising an inverter 2 and an electric motor 3. Fig. 2 is a side view and Fig. 3 is a sectional view of the arrangement 1.

As can be seen best in Fig. 2, the electric motor 3 comprises a motor housing 4. In Fig. 1 and Fig. 3 only the upper part of the motor housing 4 is visible. The inverter 2 comprises an inverter housing 5, which is fixed on top of the motor housing 4 by multiple screws 6.

As usual, the electric motor 3 comprises a stationary stator, which surrounds a rotatable rotor (not shown). In addition to the electric motor 3 a gearbox is also received in the motor housing 4.

In the sectional view of Fig. 3 it is visible that the inverter 2 comprises a DC-link capacitor 7, power electronics 8, and a printed circuit board (PCB) 9, which is located at the lower side of the inverter 2 facing the electric motor 3.

The outer side of the inverter housing 5 is provided with an inlet 10 and an outlet 11, which are part of a cooling circuit. The cooling circuit comprises a cooling channel 12, which extends between inlet 10 and outlet 11 and which is used to cool pin fins or other arrangements of the power electronics 8. The cooling circuit of the inverter 2 is formed independently from a cooling circuit of the electric motor 4.

In the figures one can see that the motor housing 4 is provided with an opening at its upper side, which is closed by the inverter housing 5. The inverter 2 with its inverter housing 5 is formed as a compact module having its own cooling circuit, so that the inverter 2 can be fully tested before it is attached to the electric motor 3. As the electric motor 3 and the inverter are each formed as separate modules, it is easy to perform tests or quality checks, after they have passed the production line. The method for assembling the arrangement 1 comprises the following steps: placing the electric motor 3 in a motor housing 4; pre-assembling the inverter 2 with an inverter housing 5; and arranging the pre-assembled inverter 2 in an opening of the motor housing 4, thereby closing the opening.

### List of reference numbers

- 1: arrangement
- 2: inverter
- 3: electric motor
- 4: motor housing
- 5: inverter housing
- 6: screw
- 7: DC-link capacitor
- 8: power electronics
- 9: printed circuit board (PCB)
- 10: inlet
- 11: outlet
- 12: cooling channel

## Claims

1. Arrangement (1), comprising an electric motor (3) and an inverter (2), **characterized in that** the electric motor (3) is received in a motor housing (4) and the inverter (2) is received in an inverter housing (5), wherein the inverter housing (5) closes an opening of the motor housing (4).

2. Arrangement according to claim 1, wherein the inverter (2) comprises a cooling circuit having a cooling channel (12) with an inlet (10) and an outlet (11), whereby the cooling circuit is formed separately from a cooling circuit of the electric motor (3).

3. Arrangement according to claim 1 or 2, wherein the inverter (2) comprises a DC-link capacitor (7), power electronics (8) and a printed circuit board (9).

4. Arrangement according to claim 3, wherein the printed circuit board (9) is located at a side of the inverter (2) facing the electric motor (3).

5. Arrangement according to any of the preceding claims, wherein the inverter (2) is a pre-assembled component, which is attached to the motor housing (4).

6. Method for assembling an arrangement (1) comprising an electric motor (3) and an inverter (2), comprising the following steps:
- placing an electric motor (3) in a motor housing (4);
- pre-assembling an inverter (2) with an inverter housing (5); and
- arranging the pre-assembled inverter (2) in an opening of the motor housing (4), thereby closing the opening.
